# EUROPÄISCHE PATENTSCHRIFT

(11) **EP 1 150 148 B1**
(45) Veröffentlichungstag und Bekanntmachung des Hinweises auf die Patenterteilung: **23.02.2005**
(21) Anmeldenummer: 01109925.6
(22) Anmeldetag: 24.04.2001
(51) Int. Cl.: G02B 6/38

(54) **Verbindungsmodul**
Connector module
Module de connexion

(30) Priorität: 27.04.2000 DE 10020675
(43) Veröffentlichungstag der Anmeldung: 31.10.2001
(73) Patentinhaber: Delphi Technologies, Inc., Troy, MI 48007 (US)
(72) Erfinder: Uc, Kamil, 42115 Wuppertal (DE); Herlitz, Martin, 42897 Remscheid (DE); Schekalla, Peter, 42329 Wuppertal (DE); Halbach, Paul Gerhard, 42369 Wuppertal (DE)
(74) Vertreter: Manitz, Finsterwald & Partner GbR

(56) Entgegenhaltungen:
- EP-A- 0 749 026
- FR-A- 2 774 181
- US-A- 4 547 039
- US-A- 4 611 887
- US-A- 4 755 018
- US-A- 5 166 995
- PATENT ABSTRACTS OF JAPAN vol. 008, no. 065 (P-263), 27. März 1984 (1984-03-27) -& JP 58 211724 A (YAZAKI SOUGIYOU KK), 9. Dezember 1983 (1983-12-09)

## Beschreibung

Die Erfindung betrifft ein Verbindungsmodul mit einem Außengehäuse, wenigstens einer optischen Ferrule und einem Modulgehäuse zur Aufnahme der Ferrule mit den Merkmalen des Oberbegriffs des Anspruchs 1, wie es z.B. aus US 4,611,887 bekannt ist.

Optische Ferrulen dienen als Anschlußelemente oder Terminals von Lichtleitern, wie sie beispielsweise auch in Kraftfahrzeugen zur Übermittlung von Signalen eingesetzt werden.

Um die Übertragung von Signalen zwischen der Ferrule und einem weiteren Bauteil - bei dem es sich um eine weitere Ferrule (Gegenferrule) oder allgemein um ein grundsätzlich beliebig ausführbares optisches oder elektrooptisches Bauteil handeln kann - zuverlässig durchzuführen, werden Verbindungsmodule eingesetzt, die zur Aufnahme einer oder mehrerer Ferrulen dienen. Für eine optimale Signalübertragung kommt es auf eine exakte Ausrichtung der Bauteile an, zwischen denen die Übertragung stattfinden soll, so daß der Anordnung der Ferrule bzw. Ferrulen im jeweiligen Verbindungsmodul eine besondere Bedeutung zukommt.

Es ist das der Erfindung zugrundeliegende Problem (Aufgabe), ein Verbindungsmodul der eingangs genannten Art zu schaffen, das bei möglichst einfacher Herstellbarkeit die Aufnahme von Ferrulen mit minimalen Positionierungstoleranzen gestattet.

Die Lösung dieser Aufgabe erfolgt durch die Merkmale des Anspruchs 1.

Durch die erfindungsgemäß vorgesehene axiale Teilung des Modulgehäuses in zwei Hälften wird eine vorzugsweise vorgesehene Herstellung der Modulhälften im Spritzgußverfahren aufgrund der einfacheren Entformung wesentlich erleichtert.

Die erfindungsgemäß an die äußere Form der Ferrule angepaßten Vertiefungen gestatten es, entweder die Ferrule in eine Modulhälfte einzulegen und durch Zusammensetzen der beiden Modulhälften im Aufnahmeraum anzuordnen oder die Ferrule bei zusammengesetztem Modulgehäuse in den von den Vertiefungen gebildeten Aufnahmeraum einzustecken.

Der von den Vertiefungen gebildete Aufnahmeraum besitzt zumindest im wesentlichen die Form der Ferrule. Erfindungsgemäß können daher Positionierungstoleranzen, die durch Spiel der im Modul angeordneten Ferrule hervorgerufen werden und eine Signalübertragung beeinträchtigen, bei gleichzeitig einfacher Herstellbarkeit und Handhabbarkeit der das Modulgehäuse bildenden Modulhälften minimiert werden.

Erfindungsgemäß weist zumindest eine Modulhälfte eine Verriegelungseinrichtung für die Ferrule auf, die durch Einstecken des zusammengesetzten Modulgehäuses in das Außengehäuse in einer Verriegelungsstellung sicherbar ist. Zur Sicherung der Verriegelung der Ferrule dient hier somit das Außengehäuse, in welches das zusammengesetzte Modulgehäuse einsteckbar ist.

Gemäß einer bevorzugten praktischen Ausführung der Erfindung sind die Vertiefungen jeweils zumindest bereichsweise als ein Abdruck der Ferrule ausgebildet.

Die Vertiefungen sind somit ein Negativ eines Teils der Ferrule. Hierdurch ist eine toleranzfreie formschlüssige Verbindung zwischen der Ferrule und den zur Bildung des Modulgehäuses zusammengesetzten Modulhälften gewährleistet.

In einer Variante der Erfindung können die Vertiefungen jeweils als ein exakter Abdruck einer Hälfte der Ferrule ausgebildet sind. Hierdurch kann die Ferrule allein durch Einlegen in die Vertiefung einer Modulhälfte und Zusammensetzen der beiden Modulhälften in einem Arbeitsgang endgültig im Aufnahmeraum justiert und verriegelt werden. Zusätzliche Maßnahmen zur Sicherung und Fixierung der Ferrule im Modulgehäuse sind hierdurch nicht erforderlich.

In einer weiteren bevorzugten Ausführungsform der Erfindung sind die Modulhälften identisch ausgeführt. Hierdurch ergibt sich bei der Herstellung der Modulhälften von selbst eine hohe Maßgenauigkeit, da im wesentlichen baugleiche Werkzeuge, insbesondere Spritzgießwerkzeuge, für die beiden Hälften eingesetzt werden können. Des weiteren weisen die Modulhälften hierbei bezüglich des Aufnahmeraumes eine werkzeugunabhängige Form auf und können mit dem gleichen Werkzeug, insbesondere mit dem gleichen Spritzgießwerkzeug, hergestellt werden. Dies führt zu einer äußerst hohen Maßgenauigkeit und zu einer erheblich verbesserten Toleranzminimierung.

Alternativ ist es auch möglich, die Modulhälften derart auszugestalten, daß sie sich lediglich durch Mittel zur gegenseitigen Verbindung, insbesondere Verrastung, und/oder durch Mittel zur Fixierung, insbesondere Klemmung, der Ferrule voneinander unterscheiden.

Die unterschiedliche Ausgestaltung lediglich hinsichtlich der Verbindungsmittel und/oder Fixierungsmittel läßt die identische Ausgestaltung der Modulhälften hinsichtlich der zur Aufnahme der Ferrule dienenden Vertiefungen unberührt, so daß auch bei dieser Variante der Erfindung eine hohe Maßgenauigkeit und damit minimale Positionierungstoleranzen sichergestellt sind.

Die Modulhälften können in einer Variante der Erfindung als separate Bauteile vorgesehen sein.

Gemäß einem weiteren bevorzugten praktischen Ausführungsbeispiel der Erfindung sind die Modulhälften miteinander insbesondere spielfrei verrastbar.

Durch die Verrastung wird die Anordnung der Ferrule im Modul gesichert. Eine spielfreie Verrastung ermöglicht eine besonders sichere und reproduzierbare Positionierung der Ferrule im Verbindungsmodul.

Des weiteren wird durch das Vorsehen von Verbindungsmitteln wie Rastmitteln eine vorteilhafte Selbstjustierung der Modulhälften beim Zusammensetzen ermöglicht, wodurch Positionierungstoleranzen der Ferrule im Verbindungsmodul minimiert werden.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1 - 3: ein Verbindungsmodul gemäß einer Ausführungsform der Erfindung, und
- Fig. 4 - 6: ein Verbindungsmodul, das nicht unter Anspruch 1 fällt, jedoch für das Verständnis der anhand von Fig. 1-3 beschriebenen Erfindung hilfreich ist.

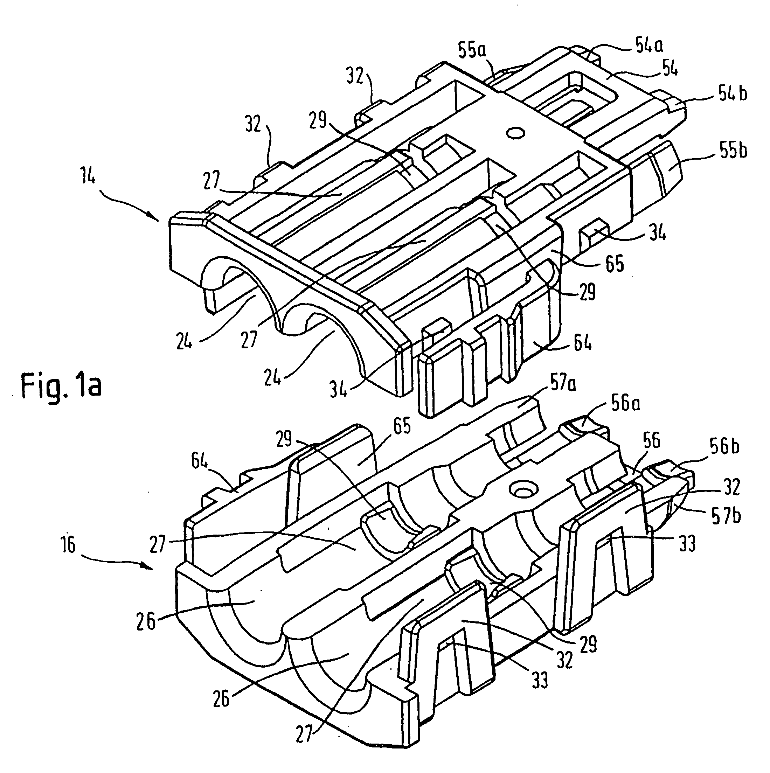

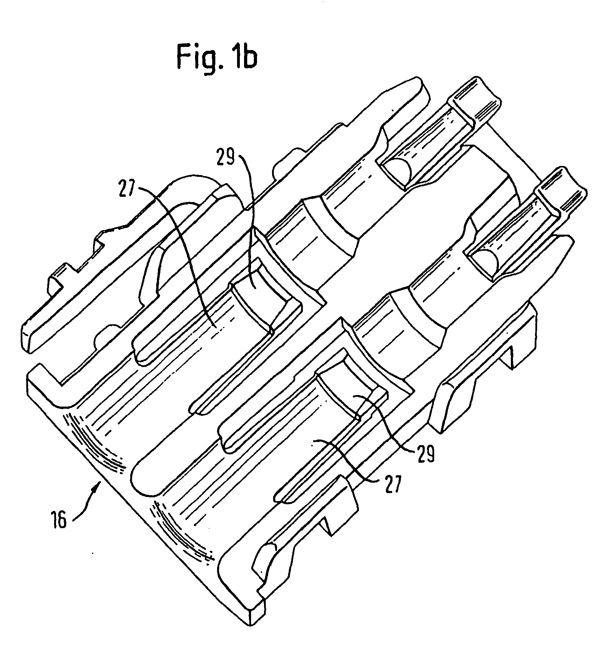

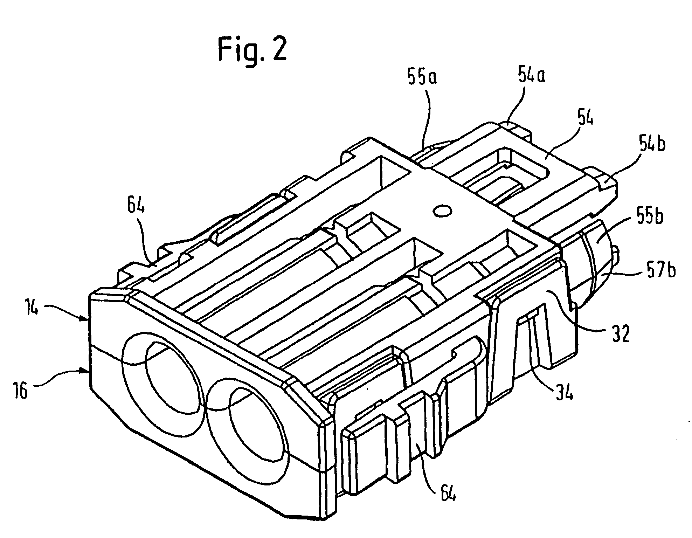

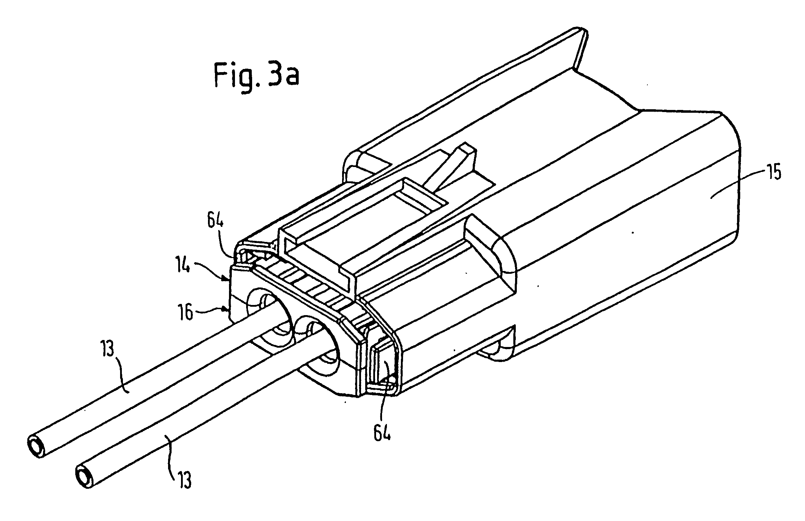

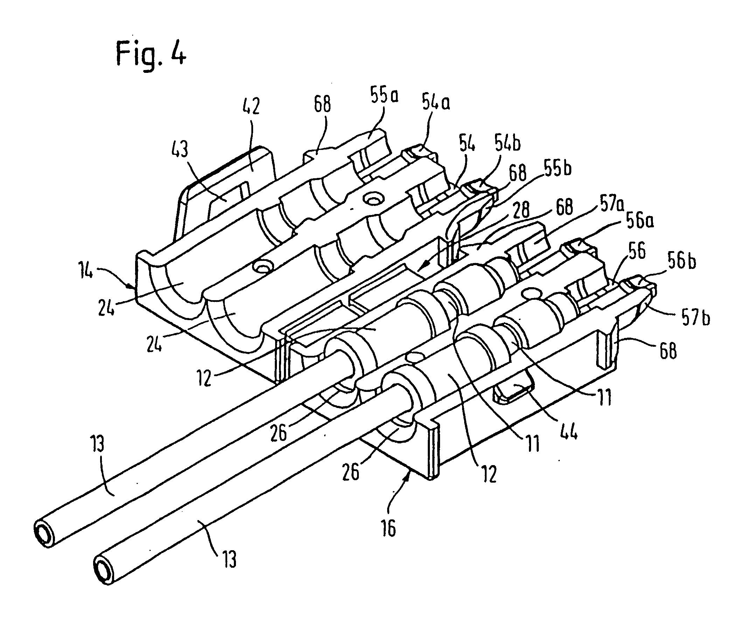

Das Verbindungsmodul gemäß Fig. 1-3 umfaßt zwei vollkommen identische Modulhälften 14, 16, die separate, im Spritzgußverfahren aus Kunststoff hergestellte Bauteile sind. Fig. 1a zeigt das Verbindungsmodul vor dem Zusammensetzen, während in Fig. 2 das zusammengesetzte Verbindungsmodul dargestellt ist. Fig. 3a zeigt das Verbindungsmodul mit darin angeordneten und mit Lichtleitern 13 gekoppelten Ferrulen, das teilweise in ein Außengehäuse 15 eingesteckt ist. Die als Anschlußelemente bzw. Terminals für die Lichtleiter 13 dienenden zylindrischen Ferrulen sind so ausgebildet, wie es in Fig. 4 in Verbindung mit einem weiteren, an anderer Stelle erläuterten Ausführungsbeispiel gezeigt und beschrieben ist.

Gemäß Fig. 1a umfaßt jede Modulhälfte 14, 16 zwei identisch ausgeführte Vertiefungen 24, 26, die bei zusammengesetztem Modul zwei Aufnahmeräume für die Ferrulen bilden.

Die Form der teilweise von im folgenden näher erläuterten Rastarmen 27 begrenzten Vertiefungen 24, 26 entspricht im wesentlichen der äußeren Form oder Kontur der aufzunehmenden Ferrulen. Die Vertiefungen 24, 26 sind somit bereichsweise ein Abdruck oder ein Negativ der Ferrulen. Bei zusammengesetztem Modulgehäuse besteht somit eine formschlüssige Verbindung zwischen dem Modulgehäuse und den darin angeordneten Ferrulen, wodurch die Ferrulen spielfrei im Modulgehäuse positioniert sind.

Die Verriegelungseinrichtungen 27 sind jeweils in Form eines elastisch auslenkbaren Rastarmes 27 mit einem als U- oder trogförmige Halbschale ausgebildeten Eingriffsabschnitt 29 vorgesehen. In Einsteckrichtung der Ferrulen nimmt die freie innere Querschnittsfläche der Eingriffsabschnitte 29 ab, so daß bei zusammengesetztem Modulgehäuse zwei Eingriffsabschnitte 29 jeweils einen trichterartigen Abschnitt für die Ferrulen bilden. Die Rastarme 27 sind durch Einstecken der Ferrulen in die bei zusammengesetztem Modulgehäuse 14, 16 von den Vertiefungen 24, 26 gebildeten Aufnahmeräume senkrecht zur Einsteckrichtung elastisch auslenkbar. Aufgrund der elastischen Verformbarkeit der Rastarme 27 springen die Rastarme 27 jeweils in eine Umfangsnut 11 (vgl. Fig. 4) der betreffenden Ferrule zurück, wenn die Ferrule vollständig in den Aufnahmeraum eingesteckt ist.

Die Ferrulen können also bei zusammengesetztem Modulgehäuse 14, 16 in die Aufnahmeräume eingesteckt werden, wobei sie im vollständig eingesteckten Zustand durch die Eingriffsabschnitte 29 der Rastarme 27 herausziehsicher im Modulgehäuse 14, 16 gehalten werden.

Die perspektivische Draufsicht auf eine Modulhälfte 16 gemäß Fig. 1b zeigt insbesondere die Rastarme 27 und die am freien Ende der Rastarme 27 ausgebildeten Eingriffsabschnitte 29.

Zur Verbindung der Modulhälften 14, 16 miteinander weist jede Modulhälfte 14, 16 auf gegenüberliegenden Modulseiten unterschiedlich ausgebildete Rastmittel 32, 33 bzw. 34 auf (vgl. Fig. 1a).

Auf einer Modulseite sind zwei über die Innenseite der Modulhälfte 14, 16 hinaus vorstehende Laschen oder Ösen 32 ausgebildet, die jeweils eine Öffnung 33 aufweisen. Auf der gegenüberliegenden Modulseite sind zwei Rastvorsprünge 34 ausgebildet, die derart positioniert sind, daß sie im zusammengesetzten, verrasteten Zustand gemäß Fig. 2 von den Laschen 32 hintergriffen sind und in die Öffnungen 33 eingreifen.

Diese Rastmittel 32, 33, 34 sind mit einem geringfügig positiven Rastwinkel versehen, wodurch eine spielfreie Verrastung der beiden Modulhälften 14, 16 und somit eine toleranzminimierte Positionierung der Ferrulen gewährleistet ist.

Im zusammengesetzten Zustand werden die beiden Modulhälften 14, 16 somit durch die jeweils in den Eckbereichen der Modulhälften 14, 16 angeordneten Rastmittel 32, 33 bzw. 34 sicher zusammengehalten.

Die Verrastung sorgt für eine Selbstjustierung des Moduls beim Zusammensetzen der Modulhälften 14, 16, da die Rastmittel 32, 33, 34 derart aufeinander abgestimmt sind, daß die Modulhälften 14, 16 nur in einer einzigen Relativposition zusammengesetzt werden können.

Zur Fixierung von nicht dargestellten Gegenferrulen, die zur Übermittlung von Signalen an die oder von den in den Aufnahmeräumen des Verbindungsmoduls angeordneten Ferrulen dienen, ist jede Modulhälfte 14, 16 mit Verbindungsmitteln in Form eines nach vorne auskragenden Rastarmes 54 bzw. 56 versehen. Jeder Rastarm 54, 56 ist mit zwei Rastabschnitten 54a, 54b bzw. 56a, 56b versehen, die bei zusammengesetztem Verbindungsmodul gemäß Fig. 2 zusammen mit ebenfalls vorstehenden seitlichen Wandabschnitten 55a, 55b bzw. 57a, 57b Rastaufnahmen für die Gegenferrulen bilden.

Die Rastarme 54, 56 sind derart ausgeführt, daß die Lichteintritts- bzw. Lichtaustrittsflächen der Ferrulen in für eine zuverlässige Signalübertragung optimal relativ zueinander ausgerichteter Weise einander gegenüberliegen.

Des weiteren sind die Modulhälften 14, 16 an einer Modulseite mit einem Rastarm 64 versehen. Der Rastarm 64 ist an seinem einen Ende mit einer zwischen den beiden Vorsprüngen 34 angeordneten Lasche 65 verbunden und in geringem Abstand von der Lasche 65 derart um etwa 90° abgewinkelt, daß er sich im wesentlichen parallel zu der Modulseite nach hinten erstreckt, wobei das freie Ende des Rastarmes 64 nicht über die Rückseite der jeweiligen Modulhälfte 14 bzw. 16 hinausragt.

Hierdurch ist im Bereich des hinteren Vorsprungs 34 zwischen der Modulhälfte 14 bzw. 16 und dem Rastarm 64 ein Zwischenraum vorhanden, in den die betreffende Lasche 32 der jeweils anderen Modulhälfte 16 bzw. 14 zur Verriegelung der beiden Modulhälften 14, 16 eingreifen kann (vgl. Fig. 2).

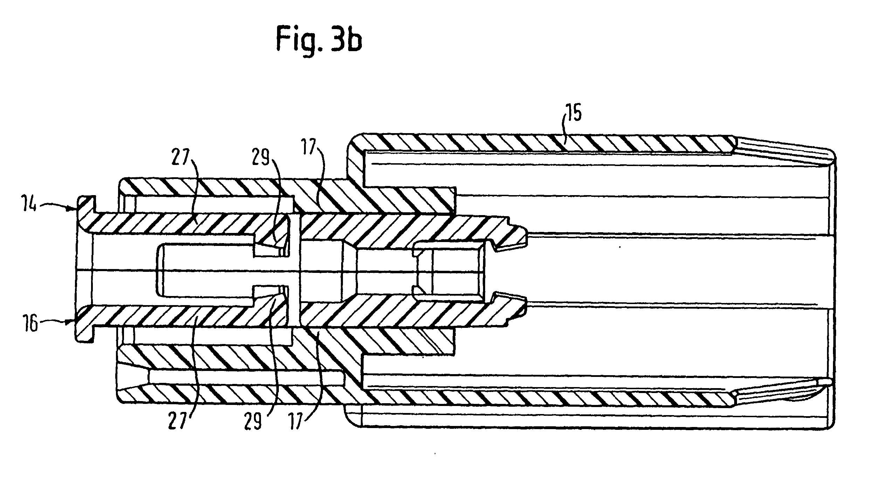

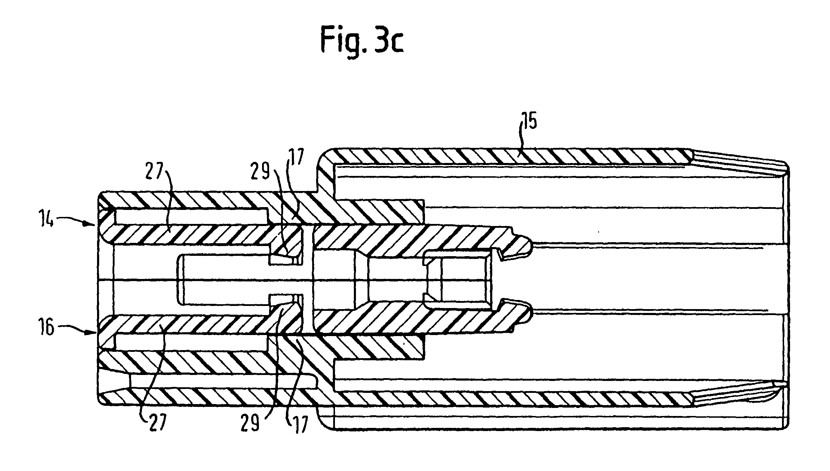

Die Rastarme 64 dienen zur Verrastung des zusammengesetzten Verbindungsmoduls in einem Außengehäuse 15 (vgl. Fig. 3a, 3b, 3c). Das Außengehäuse 15 weist innen Rastmittel auf, die mit den Rastarmen 64 bzw. mit auf der Außenseite der Rastarme 64 ausgebildeten Vorsprüngen derart zusammenwirken, daß eine zweistufige Verrastung des zusammengesetzten Verbindungsmoduls im Gehäuse 15 möglich ist.

Das aus den beiden Modulhälften 14, 16 zusammengesetzte Modulgehäuse bzw. Verbindungsmodul wird ohne darin angeordnete Ferrulen in einem vorverrasteten Zustand im Gehäuse 15 gelagert und transportiert. In diesem vorverrasteten Zustand ist das Modulgehäuse über seine Rastarme 64 herausfallsicher im Außengehäuse 15 verrastet.

Zur Anordnung der Ferrulen im Modulgehäuse 14, 16 werden in dieser ersten Verrastungsstufe zwischen Modulgehäuse 14, 16 und Außengehäuse 15 die Ferrulen mit den gekoppelten Lichtleitern 13 von hinten in die von den Vertiefungen 24, 26 gebildeten Aufnahmeräume des Moduls eingesteckt. Wie die Fig. 3b und 3c zeigen, ist das Innere des Außengehäuses 15 derart ausgebildet, daß in diesem Vorverrastungszustand, d.h. in der ersten Verrastungsstufe (vgl. Fig. 3b), die Rastarme 27 der Modulhälften 14, 16 durch Einstecken der Ferrulen senkrecht zur Einsteckrichtung weggedrückt bzw. ausgelenkt werden können. Die Ferrulen sind somit in diesem Vorverrastungszustand vollständig in das Modulgehäuse 14, 16 einführbar und werden im vollständig eingesteckten Zustand von den Eingriffsabschnitten 29 der in ihre ursprüngliche Stellung zurückgesprungenen Rastarme 27 verriegelnd hintergriffen.

Nach dem Einstecken der Ferrulen wird das Modulgehäuse 14, 16 vollständig in das Außengehäuse 15 eingesteckt, bis es in der zweiten und endgültigen Verrastungsstufe im Außengehäuse 15 einrastet (vgl. Fig. 3c). Das Außengehäuse 15 ist mit Sicherungsabschnitten 17 versehen, die bei vollständig in das Außengehäuse 15 eingestecktem Modulgehäuse 14, 16 relativ zu den Rastarmen 27 derart angeordnet sind, daß die Rastarme 27 nicht ausgelenkt werden können. Die Verriegelung der Ferrulen im Modulgehäuse 14, 16 durch die Rastarme 27 wird somit durch das Außengehäuse gesichert.

Fig. 3 zeigt das in das Außengehäuse 15 eingesteckte Verbindungsmodul 14, 16 im Zustand der Vorverrastung, in dem das Modul 14, 16 noch nicht vollständig in das Gehäuse 15 eingeführt ist und die Ferrulen mit den gekoppelten Lichtleitern 13 vollständig in das zusammengesetzte Modulgehäuse 14, 16 eingesteckt sind.

Fig. 3b zeigt in einer geschnittenen Seitenansicht die Vorverraststellung, in welcher sich die Eingriffsabschnitte 29 der Rastarme 27 in Einsteckrichtung vor den Sicherungsabschnitten 17 des Außengehäuses 15 befinden. Zwischen den Rastarmen 27 und der Wand des Außengehäuses 15 ist ein Zwischenraum vorhanden, in den die Rastarme 27 ausweichen können, wenn in das Modulgehäuse 14, 16 die jeweilige Ferrule (nicht dargestellt) eingesteckt wird.

Die geschnittene Seitenansicht der Fig. 3c zeigt das Modulgehäuse 14, 16 im vollständig in das Außengehäuse 15 eingesteckten Zustand, in welchem die Sicherungsabschnitte 17 des Außengehäuses 15 die Rastarme 27 in ihrer Verriegelungsstellung sichern. In dieser zweiten, endgültigen Verrastungsstufe des Modulgehäuses 14, 16 im Außengehäuse 15 ist eine Freigabe- oder Entriegelungsbewegung der Rastarme 27 senkrecht zur Einsteckrichtung nicht möglich. Die Rückseite des Modulgehäuses 14, 16 schließt in diesem Zustand im wesentlichen bündig mit der rückwärtigen Stirnseite des Außengehäuses 15 ab.

Die Ausführungsform des Verbindungsmoduls gemäß Fig. 4-6 unterscheidet sich von derjenigen der Fig. 1-3 im wesentlichen durch die Ausgestaltung der Vertiefungen 24, 26 und durch die Mittel zum Verbinden der Modulhälften 14, 16.

In diesem Ausführungsbeispiel ist das Modulgehäuse als ein einstückiges Bauteil vorgesehen, wobei die beiden Modulhälften 14, 16 durch ein zwei axial beabstandete Scharnierabschnitte umfassendes Filmscharnier 28 gelenkig miteinander verbunden sind.

Alternativ könnte das Verbindungsmodul auch durch eine Zweikomponentenspritzung hergestellt werden, bei der ein die beiden Modulhälften 14, 16 gelenkig miteinander verbindendes Scharnier beispielsweise aus einem Elastomer besteht und die beiden Modulhälften 14, 16 aus einem Material hergestellt sind, das nicht oder nur in geringem Maße elastisch verformbar ist. Für dieses Material kommt beispielsweise verstärkter Kunststoff in Frage. Ein Vorteil dieser Variante besteht darin, daß die Festigkeit der die Ferrulen 12 aufnehmenden Modulhälften 14, 16 erhöht werden kann, da das Verbindungsmodul bzw. Modulgehäuse lediglich im Scharnierbereich elastisch verformbar ist. Ein weiterer Vorteil ist, daß die Anbindung des Scharnierbereiches an die Modulhälften 14, 16 derart ausgestaltet werden kann, daß durch das Scharnier eine Vorspannung in Schließrichtung der Modulhälften 14, 16 erzielt werden kann, d.h. über den Scharnierbereich wird auf die Modulhälften 14, 16 eine Kraft ausgeübt, die danach strebt, das Modulgehäuse zu schließen.

Die Einteiligkeit des Verbindungsmoduls erleichtert dessen Handhabbarkeit, da die beiden Modulhälften 14, 16 stets zusammen vorliegen.

Des weiteren ist zur gegenseitigen Verrastung die eine Modulhälfte 14 mit einer eine Öffnung 43 aufweisenden Lasche 42 und die andere Modulhälfte 16 mit einem Rastvorsprung 64 versehen.

Fig. 4 zeigt außerdem die jeweils mit einem Ende eines Lichtleiters 13 gekoppelten Ferrulen, die in die Vertiefungen 26 der einen Modulhälfte 16 des geöffneten Verbindungsmoduls eingelegt sind.

In dem Ausführungsbeispiel der Fig. 4 - 6 sind die Vertiefungen 24, 26 als exakter Abdruck oder exaktes Negativ einer Ferrulen-Hälfte ausgebildet, wodurch bei zusammengesetztem Modulgehäuse eine exakte formschlüssige Verbindung zwischen den Ferrulen 12 und den Modulhälften 14, 16 bewirkt wird. Bei dieser Ausgestaltung der Vertiefungen 24, 26 greifen die Modulhälften 14, 16 in die Umfangsnut 11 der Ferrulen 12 ein, wodurch die Ferrulen 12 in den von den Vertiefungen 24, 26 gebildeten Aufnahmeräumen verriegelt sind. Zusätzliche Mittel zur Verriegelung der Ferrulen 12 oder zur Sicherung der Verriegelung sind bei diesem Ausführungsbeispiel nicht erforderlich.

Hinsichtlich der Rastarme 54, 56 und der zusammen mit diesen die Rastaufnahmen für die Gegenferrulen bildenden seitlichen Wandabschnitte 56a, 56b, 57a, 57b entspricht diese Ausführungsform derjenigen der Fig. 1 - 3.

In dem Ausführungsbeispiel der Fig. 4 - 6 werden die Ferrulen 12 bei geöffnetem Modulgehäuse in die Vertiefungen 24 bzw. 26 einer der beiden Modulhälften 14 bzw. 16 eingelegt. Anschließend wird das Modulgehäuse durch Zusammenklappen und Verrasten der beiden Modulhälften 14, 16 verschlossen. Durch die exakte Anpassung der Vertiefungen 24, 26 an die äußere Form der Ferrulen 12 sind diese bei zusammengesetztem Modulgehäuse in den Aufnahmeräumen spielfrei angeordnet.

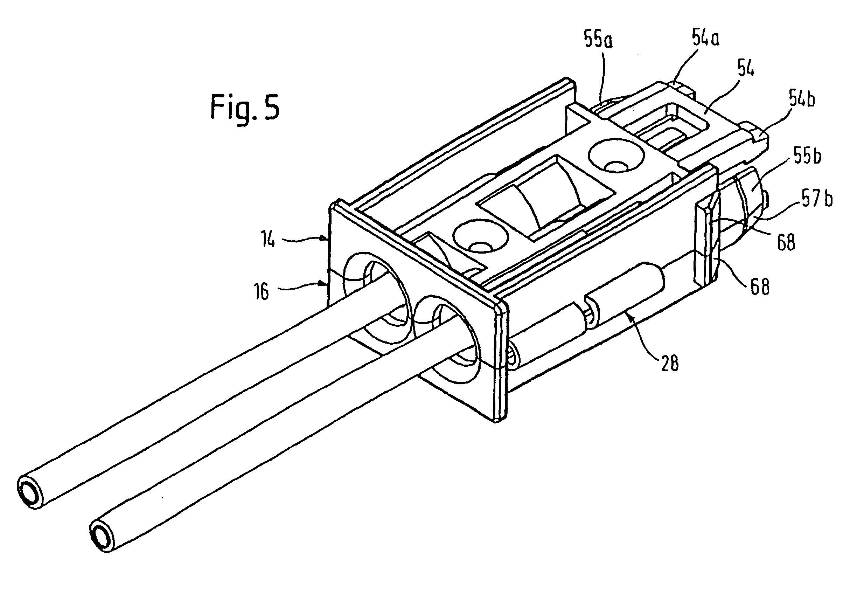

Fig. 5 zeigt das Verbindungsmodul im geschlossenen Zustand. In der perspektivischen Darstellung sind die beiden Abschnitte des Filmscharniers 28 zu erkennen, während auf der gegenüberliegenden Modulseite die beiden Modulhälften 14, 16 miteinander verrastet sind, wodurch das Modul sicher im geschlossenen Zustand gehalten wird.

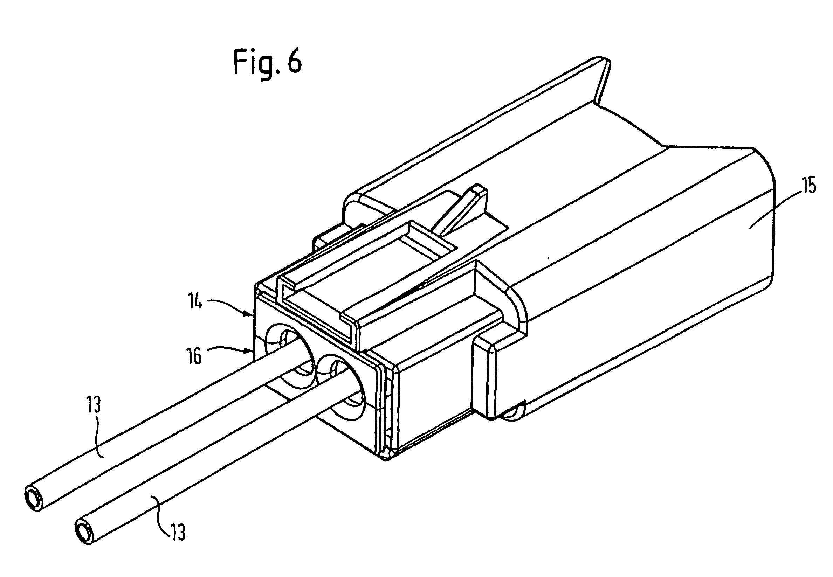

In dem Zustand gemäß Fig. 5 kann das aus den beiden Modulhälften 14, 16 zusammengesetzte Modulgehäuse bzw. Verbindungsmodul bereits als vollwertiger Steckverbinder genutzt werden, da die Ferrulen 12 allein aufgrund der Ausgestaltung der Modulhälften 14, 16 bzw. der Vertiefungen 24, 26 herausziehsicher im Modulgehäuse angeordnet sind. Wie Fig. 6 zeigt, kann jedoch das Gehäusemodul 14, 16 in ein Außengehäuse 15 eingesteckt werden, das identisch zu dem anhand von Fig. 3 in Verbindung mit der zuerst beschriebenen Ausführungsform der Erfindung erläuterten Außengehäuse ausgeführt sein kann. Zur Verriegelung bzw. Sicherung der Verriegelung der Ferrulen 12 im Modulgehäuse 14, 16 ist bei der Ausführungsform gemäß Fig. 4 - 6 das Außengehäuse 15 jedoch nicht erforderlich.

Zur Verrastung mit dem Außengehäuse 15 sind im vorderen Bereich jeder Modulhälfte 14, 16 Rastvorsprünge 68 vorgesehen. Die Rastvorsprünge 68 werden im vollständig eingesteckten Zustand von inneren Rastmitteln des Gehäuses 15 z.B. in Form von Rasthaken oder Rastarmen verriegelnd hintergriffen.

### Bezugszeichenliste

- 11: Umfangsnut
- 12: Ferrule
- 13: Lichtleiter
- 14: Modulhälfte
- 15: Außengehäuse
- 16: Modulhälfte
- 17: Sicherungsabschnitt
- 24: Vertiefung
- 26: Vertiefung
- 27: Verriegelungseinrichtung, Rastarm
- 28: Filmscharnier
- 29: Eingriffsabschnitt
- 32: Lasche
- 33: Öffnung
- 34: Vorsprung
- 42: Lasche
- 43: Öffnung
- 44: Vorsprung
- 54: Rastarm
- 54a, 54b: Rastabschnitt
- 55a, 55b: Wandabschnitt
- 56: Rastarm
- 56a, 56b: Rastabschnitt
- 57a, 57b: Randabschnitt
- 64: Rastarm
- 65: Lasche
- 68: Rastvorsprung

## Patentansprüche

1. Verbindungsmodul mit einem Außengehäuse (15), wenigstens einer optischen Ferrule (12) und einem Modulgehäuse (14, 16) zur Aufnahme der Ferrule (12), das in einer Ebene entlang der axialen Richtung geteilt ist und aus zwei Modulhälften (14, 16) besteht, die bei zusammengesetztem Modulgehäuse einen Aufnahmeraum für die Ferrule (12) begrenzen, der von in den Modulhälften (14, 16) ausgebildeten und an die äußere Form der Ferrule (12) angepaßten Vertiefungen (24, 26) gebildet ist,
**dadurch gekennzeichnet,**
**daß** die Vertiefungen (24, 26) derart ausgeführt sind, daß die Ferrule (12) bei zusammengesetztem Modulgehäuse (14, 16) in den von den Vertiefungen (24, 26) gebildeten Aufnahmeraum einsteckbar ist, und
**daß** zumindest eine Modulhälfte (14, 16) eine Verriegelungseinrichtung (27) für die Ferrule (12) aufweist, die durch Einstecken des zusammengesetzten Modulgehäuses in das Außengehäuse (15) in einer Verriegelungsstellung sicherbar ist.

2. Verbindungsmodul nach Anspruch 1,
**dadurch gekennzeichnet,**
**daß** die Verriegelungseinrichtung wenigstens einen Rastarm (27) aufweist, der bei zusammengesetztem Modulgehäuse (14, 16) durch Einstecken der Ferrule (12) in den Aufnahmeraum aus einer Verriegelungsstellung elastisch auslenkbar ist.

3. Verbindungsmodul nach Anspruch 1 oder 2,
**dadurch gekennzeichnet,**
**daß** die Vertiefungen (24, 26) jeweils zumindest bereichsweise als ein Abdruck der Ferrule (12) ausgebildet sind.

4. Verbindungsmodul nach einem der vorhergehenden Ansprüche,
**dadurch gekennzeichnet,**
**daß** die Modulhälften (14, 16) identisch ausgeführt sind.

5. Verbindungsmodul nach einem der Ansprüche 1 bis 3,
**dadurch gekennzeichnet,**
**daß** die Modulhälften (14, 16) sich lediglich durch Mittel zur gegenseitigen Verbindung, insbesondere Verrastung, und/oder durch Mittel zur Fixierung der Ferrule (12) voneinander unterscheiden.

6. Verbindungsmodul nach einem der vorhergehenden Ansprüche,
**dadurch gekennzeichnet,**
**daß** die Vertiefungen (24, 26) jeweils als ein exakter Abdruck einer Hälfte der Ferrule (12) ausgebildet sind.

7. Verbindungsmodul nach einem der vorhergehenden Ansprüche,
**dadurch gekennzeichnet,**
**daß** die Modulhälften (14, 16) als separate Bauteile vorgesehen sind.

8. Verbindungsmodul nach einem der vorhergehenden Ansprüche,
**dadurch gekennzeichnet,**
**daß** die Modulhälften (14, 16) jeweils Verbindungsmittel (64), insbesondere Rastmittel, zur Koppelung mit dem zur Aufnahme des Modulgehäuses dienenden Außengehäuse (15) aufweisen.

9. Verbindungsmodul nach Anspruch 8,
**dadurch gekennzeichnet,**
**daß** als Verbindungsmittel jeweils ein sich zumindest bereichsweise im wesentlichen parallel zu einer Modulseite erstreckender Rastarm (64) vorgesehen ist.

10. Verbindungsmodul nach Anspruch 8 oder 9,
**dadurch gekennzeichnet,**
**daß** die Verbindungsmittel (64) für eine zweistufige Verrastung des Modulgehäuses (14, 16) im Außengehäuse (15) ausgebildet sind.

11. Verbindungsmodul nach einem der vorhergehenden Ansprüche,
**dadurch gekennzeichnet,**
**daß** die Modulhälften (14, 16) miteinander insbesondere spielfrei verrastbar sind.

12. Verbindungsmodul nach einem der vorhergehenden Ansprüche,
**dadurch gekennzeichnet,**
**daß** Rastmittel jeder Modulhälfte (14, 16) auf einer Modulseite wenigstens eine mit einer Öffnung (33) versehene Lasche (32) und auf der gegenüberliegenden Modulseite zumindest einen Vorsprung (34) umfassen.

13. Verbindungsmodul nach einem der Ansprüche 1 bis 11,
**dadurch gekennzeichnet,**
**daß** als Rastmittel der einen Modulhälfte (14) wenigstens eine mit einer Öffnung (43) versehene Lasche (42) und als Rastmittel der anderen Modulhälfte (16) zumindest ein Vorsprung (44) vorgesehen ist.

14. Verbindungsmodul nach einem der vorhergehenden Ansprüche,
**dadurch gekennzeichnet,**
**daß** die Modulhälften (14, 16) jeweils Verbindungsmittel (54, 56), insbesondere Rastmittel, zur Koppelung mit einer Gegenferrule aufweisen.

15. Verbindungsmodul nach Anspruch 14,
**dadurch gekennzeichnet,**
**daß** die Rastmittel in Form wenigstens eines auskragenden Rastarmes (54) vorgesehen sind, der bei zusammengesetztem Modulgehäuse mit zumindest einem Rastarm (56) der jeweils anderen Modulhälfte (16) eine Rastaufnahme für die Gegenferrule bildet.

## Claims

1. Connector module having an outer housing (15), at least one optical ferrule (12) and a module housing (14, 16) for the reception of the ferrule (12) which is divided in a plane along the axial direction and which consists of two module halves (14, 16) which, when the module housing is assembled, bound a reception space for the ferrule (12) which is formed by recesses (24, 26) which are formed in the module halves (14, 16) and which are matched to the outer shape of the ferrule (12),
**characterized in that**
the recesses (24, 26) are designed such that the ferrule (12) can be plugged into the reception space which is formed by the recesses (24, 26) when the module housing (14, 16) is assembled; and
**in that** at least one module half (14, 16) has a locking device (27) for the ferrule (12) which can be secured in a locking position by plugging the assembled module housing into the outer housing (15).

2. Connector module in accordance with claim 1,
**characterized in that** the locking device has at least one latching arm (27) which, when the module housing (14, 16) is assembled, can be elastically deflected out of a locking position by plugging the ferrule (12) into the reception space.

3. Connector module in accordance with claim 1 or claim 2, **characterized in that** the recesses (24, 26) are each formed at least regionally as an impression of the ferrule (12).

4. Connector module in accordance with any one of the preceding claims, **characterized in that** the module halves (14, 16) are designed identically.

5. Connector module in accordance with any one of the claims 1 to 3, **characterized in that** the module halves (14, 16) differ from one another merely by means for their mutual connection, in particular latching, and/or by means for the fixing of the ferrule (12).

6. Connector module in accordance with any one of the preceding claims, **characterized in that** the recesses (24, 26) are each formed as an exact impression of one half of the ferrule (12).

7. Connector module in accordance with any one of the preceding claims, **characterized in that** the module halves (14, 16) are provided as separate components.

8. Connector module in accordance with any one of the preceding claims, **characterized in that** the module halves (14, 16) each have connection means (64), in particular latching means, for coupling to the outer housing (15) which serves for the reception of the module housing.

9. Connector module in accordance with claim 8, **characterized in that** a respective latching arm (64) which extends at least regionally substantially parallel to a module side is provided as a connection means.

10. Connector module in accordance with claim 8 or claim 9, **characterized in that** the connection means (64) are designed for a two stage latching of the module housing (14, 16) in the outer housing (15).

11. Connector module in accordance with any one of the preceding claims, **characterized in that** the module halves (14, 16) can be latched with one another in particular without play.

12. Connector module in accordance with any one of the preceding claims, **characterized in that** latching means of each module half (14, 16) comprise, on one module side, at least one lug (32) which is provided with an opening (33) and at least one projection (34) on the opposite module side.

13. Connector module in accordance with any one of the claims 1 to 11, **characterized in that** at least one lug (42) which is provided with an opening (43) is provided as the latching means of the one module half (14) and at least one projection (44) is provided as the latching means of the other module half (16).

14. Connector module in accordance with any one of the preceding claims, **characterized in that** the module halves (14, 16) each have connection means (54, 56), in particular latching means, for coupling to a counter-ferrule.

15. Connector module in accordance with claim 14, **characterized in that** the latching means are provided in the form of at least one protruding latching arm (54), which forms a latching reception for the counter-ferrule with at least one latching arm (56) of the respective other module half (16) when the module housing is assembled.

## Revendications

1. Module de liaison avec un boîtier extérieur (15), au moins une férule (12) optique et un boîtier de module (14, 16) pour le logement de la férule (12), qui est divisé dans un plan le long de la direction axiale et comprend deux moitiés de module (14, 16), qui délimitent, dans le cas d'un boîtier de module assemblé, un espace de logement pour la férule (12), qui est formé par des cavités (24, 26) réalisées dans les moitiés de module (14, 16) et adaptées à la forme extérieure de la férule (12), **caractérisé en ce que** les cavités (24, 26) sont réalisées de telle sorte que la férule (12) peut être emboîtée dans le compartiment de logement formé par les cavités (24, 26) dans le cas d'un boîtier de module (14, 16) assemblé, et **en ce qu'**au moins une moitié de module (14, 16) présente un système de verrouillage (27) pour la férule (12), qui peut être bloqué par l'emboîtement du boîtier de module assemblé dans le boîtier extérieur (15) dans une position de verrouillage.

2. Module de liaison selon la revendication 1, **caractérisé en ce que** le système de verrouillage présente au moins un bras d'encliquetage (27), qui peut être dévié de façon élastique, dans le cas d'un boîtier de module (14, 16) assemblé, par l'emboîtement de la férule (12) dans l'espace de logement à partir d'une position de verrouillage.

3. Module de liaison selon la revendication 1 ou 2, **caractérisé en ce que** les cavités (24, 26) sont conçues respectivement au moins par endroits comme une empreinte de la férule (12).

4. Module de liaison selon l'une quelconque des revendications précédentes, **caractérisé en ce que** les moitiés de module (14, 16) sont conçues de façon identique.

5. Module de liaison selon l'une quelconque des revendications 1 à 3, **caractérisé en ce que** les moitiés de module (14, 16) se différencient les unes des autres uniquement par des moyens pour la connexion réciproque, en particulier l'encliquetage, et/ou par des moyens pour la fixation de la férule (12).

6. Module de liaison selon l'une quelconque des revendications précédentes, **caractérisé en ce que** les cavités (24, 26) sont conçues respectivement comme une empreinte exacte d'une moitié de la férule (12).

7. Module de liaison selon l'une quelconque des revendications précédentes, **caractérisé en ce que** les moitiés de module (14, 16) sont conçues comme des composants séparés.

8. Module de liaison selon l'une quelconque des revendications précédentes, **caractérisé en ce que** les moitiés de module (14, 16) présentent respectivement des moyens de liaison (64), en particulier des moyens d'encliquetage, pour le couplage avec le boîtier extérieur (15) servant au logement du boîtier de module.

9. Module de liaison selon la revendication 8, **caractérisé en ce qu'**il est prévu comme moyen de liaison respectivement un bras d'encliquetage (64) s'étendant au moins par endroits sensiblement parallèlement à un côté du module.

10. Module de liaison selon la revendication 8 ou 9, **caractérisé en ce que** les moyens de liaison (64) sont conçus pour un encliquetage à deux niveaux du boîtier de module (14, 16) dans le boîtier extérieur (15).

11. Module de liaison selon l'une quelconque des revendications précédentes, **caractérisé en ce que** les moitiés de module (14, 16) peuvent être encliquetées l'une avec l'autre en particulier sans jeu.

12. Module de liaison selon l'une quelconque des revendications précédentes, **caractérisé en ce que** les moyens d'encliquetage de chaque moitié de module (14, 16) comprennent sur un côté du module au moins une languette (32) pourvue d'une ouverture (33) et sur le côté opposé du module au moins une partie saillante (34).

13. Module de liaison selon l'une quelconque des revendications 1 à 11, **caractérisé en ce qu'**au moins une languette (42) pourvue d'une ouverture (43) est prévue comme moyen d'encliquetage d'une moitié de module (14) et au moins une partie saillante (44) est prévue comme moyen d'encliquetage de l'autre moitié de module (16).

14. Module de liaison selon l'une quelconque des revendications précédentes, **caractérisé en ce que** les moitiés de module (14, 16) présentent respectivement des moyens de liaison (54, 56), en particulier des moyens d'encliquetage, pour le couplage avec une contre-férule.

15. Module de liaison selon la revendication 14, **caractérisé en ce que** les moyens d'encliquetage sont prévus sous la forme d'au moins un bras d'encliquetage (54) en porte-à-faux, qui forme, dans le cas d'un boîtier de module assemblé avec au moins un bras d'encliquetage (56) de l'autre moitié de module (16) respective, un logement d'encliquetage pour la contre-férule.
